(19) Europäisches Patentamt
European Patent Office
Office européen des brevets

(11) **EP 2 536 035 B1**

(12) **EUROPEAN PATENT SPECIFICATION**

(45) Date of publication and mention
of the grant of the patent:
**07.01.2015 Bulletin 2015/02**

(51) Int Cl.:
***H04B 3/54*** (2006.01)

(21) Application number: **12169415.2**

(22) Date of filing: **25.05.2012**

(54) **Power Line Data Communication Using Current Modulation**

Stromleitungsdatenkommunikation mittels Strommodulation

Communication de données de ligne de puissance utilisant une modulation de courant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2011 US 201113159769**

(43) Date of publication of application:
**19.12.2012 Bulletin 2012/51**

(73) Proprietor: **Astronics Advanced Electronic Systems Corp.**
**Redmond, WA 98052 (US)**

(72) Inventor: **Potter, Frederick J.**
**Trumbauersville, PA Pennsylvania 18970 (US)**

(74) Representative: **Klunker . Schmitt-Nilson . Hirsch**
**Patentanwälte**
**Destouchesstraße 68**
**80796 München (DE)**

(56) References cited:
**WO-A1-2008/119996    GB-A- 2 471 860**
**US-A1- 2006 187 015**

## Description

The invention was made with U.S. Government support under contract (BAA) DTFACT-09-R-00020 awarded by the Federal Aviation Administration. The U.S. Government has certain rights in the invention.

This invention relates to communication of data over a power feeder, and more particularly to communication of sensor data over the power feeder to the sensor.

It is often useful to receive a continuous stream of data regarding the operation of an electrical device or system, for example, the positioning of a load actuator on an aircraft. A sensor adjacent the load actuator detects its position and generates an electrical signal corresponding to that pulse. This electrical signal is then transmitted to a microprocessor or other control device for either data storage or to signal the load actuator to make an adjustment in position. Transmission of the electrical signal may be by separate dedicated signal lines. However, separate signal lines increase the cost and complexity of a system. In a crowded environment, such as an aircraft bulkhead, there may be limited space for additional signal lines.

It is known to transmit data along the same lines as provide power to the actuator. Typically, the data is represented as a voltage fluctuation. However, power lines connecting a DC power source to a load have very low impedance and minimize voltage fluctuations. The lines must be heavily filtered to raise the impedance sufficiently to detect voltage fluctuations.

United States Patent No. 7,304,567 to Canfield discloses a method to communicate control signals over a vehicle power bus. A current load coupled to a power source is modulated by an information signal. The resultant current changes cause voltage fluctuations that mirror the current changes. A microprocessor senses and decodes the voltage fluctuations.

In one embodiment of the disclosure, there is disclosed a system that is effective to transmit information about a load that draws a load current to a recipient. This system includes a sensor effective to generate a first signal containing information about the load and a reference second signal. A first device calculates a ratio of the first signal to the second signal and converts that ratio into a binary number. A second device converts 0 members of the binary number to a first data current and 1 members of the binary number into a second data current that is different from the first data current. A common electrical line transmits a total current that is a sum of the load current plus the first data current or a sum of the load current plus the second data current. The recipient communicates with the common electrical line and converts current modulations to the binary number and the binary number to the information.

In another embodiment of the disclosure, there is disclosed a method to transmit information about a load drawing a load current to a recipient. This method includes the steps of transforming the information into a binary number, transforming the binary number into pulses of a first data current and a different second data current wherein the first data current corresponds to binary 0 values and the second data current corresponds to binary 1 values, summing the load current and the first data current or the load current and the second data current to form a total current, and the recipient converting modulation of the total current into the binary number and the binary number into the information.

The details of one or more embodiments of the invention are set forth in the accompanying drawings and the description below. Other features, objects and advantages of the invention will be apparent from the description and drawings, and from the claims.

FIG. 1 is a schematic illustrating components of the data communication system described herein.

FIG. 2 graphically illustrates utilizing current modulation to communicate data.

FIG. 3 is a schematic illustrating components of the data encoder used to modulate current in response to data signals from the load.

Like reference numbers and designations in the various drawings indicate like elements.

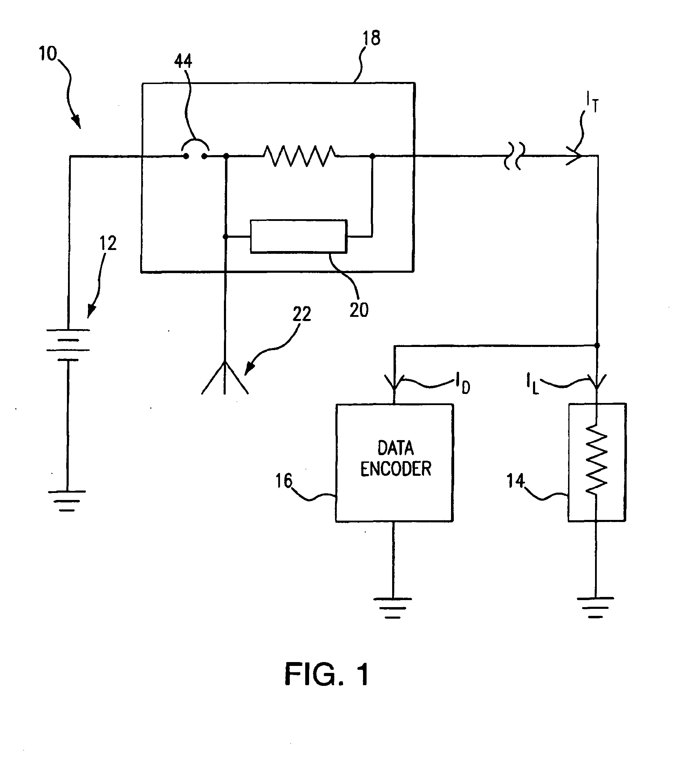

FIG. 1 schematically illustrates components of a data communication system 10 having a power source 12 electrically interconnected to a load 14. The load 14 generates data, either via internal components or via an external sensor in proximity to the load. For example, the load 14 may be an actuator attached to an aircraft rudder and the sensor determines the angle between the rudder and the vertical stabilizer. The sensor generates an electrical signal that is dependent on that angle. Typically, the power source 12 is a direct current power source, such as a 24V volt battery.

A data encoder 16 receives data signals from either the load 14 or external sensor and periodically draws a current load, $I_D$, responsive to those data signals. The load 14 also draws a current, $I_L$, such that the total current, IT, is the sum of $I_D$ and $I_L$.

$$I_T = I_D + I_L \qquad\qquad (1)$$

As $I_D$ is dependent on the data signals, $I_T$ will vary dependent on the data signals. Variations in $I_T$, in the form of current modulations are detected and the data signals interpreted from those modulations. $I_T$ may be measured at an electronic circuit breaker 18. A microprocessor 20 within the electronic circuit breaker 18 may interpret the current modulations and respond appropriately, for example by terminating or modulating the power feed. Alternatively, the current modulations may be decoded and transmitted 22 to a remote computer or microprocessor for interpretation and response.

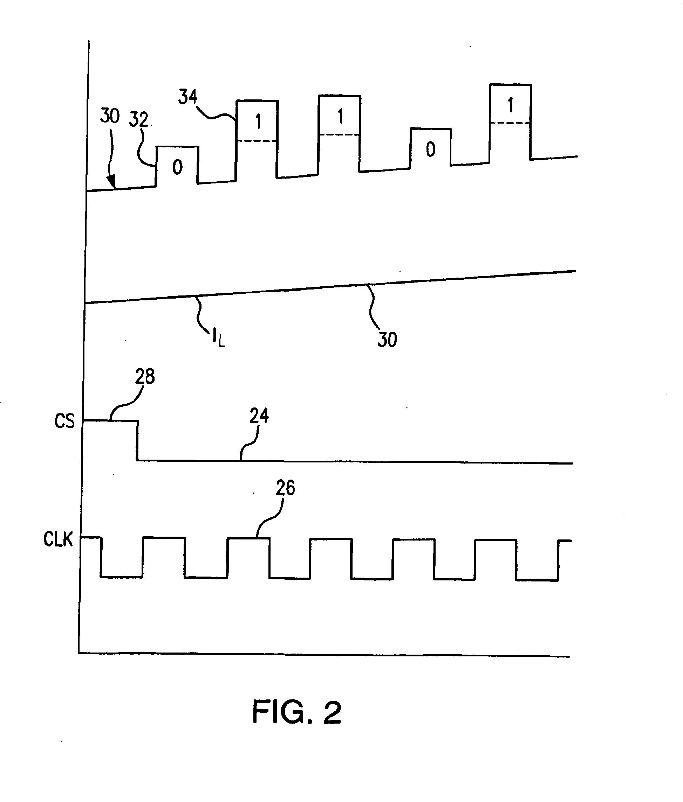

FIG. 2 graphically illustrates utilizing current modulation to communicate data. A clock, CLK, generates pulses 26 of a known periodicity, for example 100 microseconds. A counter, CS, generates a duty cycle that is on 24 for a known number of clock pulses 26 and then is off 28 for a known number of clock pulses. On 24 portion of the duty cycle is normally a standard length binary number, such as 16 pulses. The load current, $I_L$, is a value that may be changing, although the change per clock pulse is usually not excessively large. When the duty cycle is in the off portion, the data encoder does not affect $I_L$ (region 30). When the duty cycle is on, the data encoder draws current at each clock pulse. The amount of current drawn may be a first data current 32 or a different (from the first) second data current 34. Typically, the second data current 34 will be twice the first data current 32. Current modulations in $I_T$ therefore represent binary values of 0 or 1 and $I_T$ is used to generate binary numbers that are dependent on the data coming from the load sensor. For example, in a binary 16 code, 4096 may indicate that the actuator is 100% open and 2048 may indicate the actuator is 50% open.

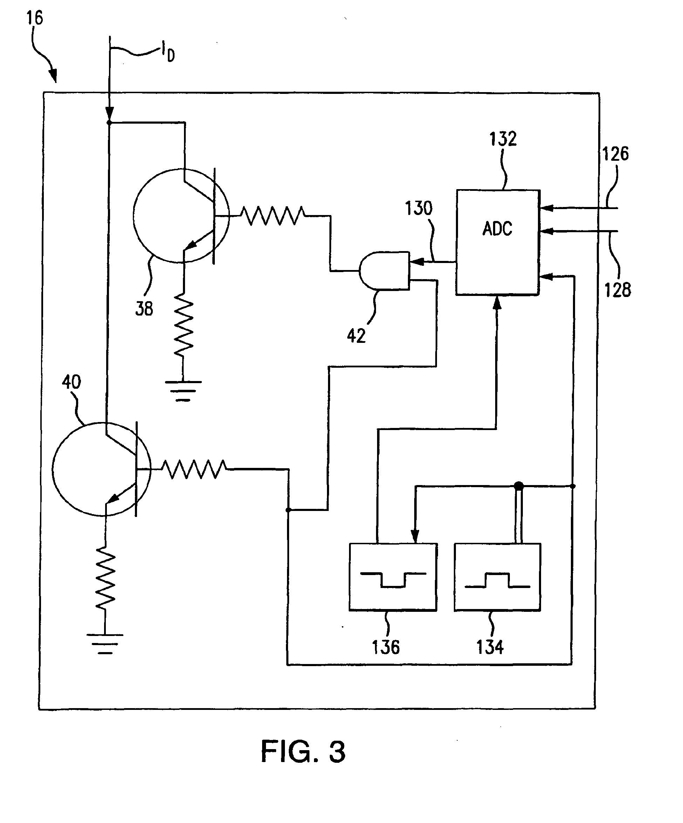

FIG. 3 is a schematic illustrating components of the data encoder 16 that modulate data current load, $I_D$, in response to data signals 126 from the load. Data signal 126 is compared to a reference signal 128 and the ratio transmitted as a digital data stream 130. Returning to the actuator example above, the data signal 126 may be a first voltage, $V_1$, that depends on the percent open of the actuator and the reference signal 128 may be a second voltage, $V_2$, representing the actuator fully open. An analog to digital converter (ADC) 132 converts the ratio into a digital, binary, value. If the actuator is 50% open, then the ratio $V_1:V_2$ would be 1:2 that for a binary 16 code would be converted to the value 2048 and transmitted via digital data stream 130.

ADC 132 has a serial peripheral interface bus (SPI) whereby the flow of digital data stream 130 is controlled by clock 134 and counter 136. Referring to Fig. 2 concurrently with Fig. 3, when the counter 136 is in off portion 28 of the duty cycle, analog data is acquired from data signal 126, compared to reference signal 28 and converted into digital data. When the counter shifts to the on portion 24 of the duty cycle, the digital data is converted into a stream of 0 (reference numeral 32) and 1 (reference numeral 34) current values which are manifest in $I_D$ as data transmitting current modulations. A family of ADCs that connect to SPI without external logic are sold by Maxim Integrated Products, Inc. of Sunnyvale, CA as "MAXIM 2Msps/3Msps, Low-Power, Serial 12-/10-/8-Bit ADCs".

Transistor current sources 38, 40 create "1" and "0" in synchronization with the clock 134. "And" gate 42 synchronizes the clock 134 and transistors 38, 40 by the data to be transmitted from the A to D (132). A "1" is created by activating both transistors (38 and 40) and a "0" is created by activating only transistor (40).

The current from transistors 38, 40 is summed with the load current $I_L$ (Fig. 1) and measured and decoded by the Electronic Circuit Breaker 18 current measurement shunt 44 and associated microprocessor 20.

The frequency of the clock 134 and Mark (1's) and Space (0's) current pulses are chosen based on the possible variations in load current, $I_L$. It is anticipated that one millisecond (ms) clock pulses will be used for most applications, making an update of an 8 bit data word possible in less than 10 ms. This is compatible with the 100 ms sampling rate required by most analog sensors.

Alternatively, the ADC may be replaced by a microprocessor to operate transistor current sources 38, 40.

Another alternative is to use a high frequency sinusoidal current, selected to have low impact on electromagnetic interference (EMI) emissions, with the digital data encoded as frequency shifts in the carrier, or as a presence or absence of the carrier.

Still another alternative is to transmit current pulses with a duty cycle proportional to some analog value to be communicated, or current pulses having a magnitude proportional to the analog value to be communicated.

One or more embodiments of the present invention have been described. Nevertheless, it will be understood that various modifications may be made without departing from the scope of the following claims.

**Claims**

1. A system (10) effective to transmit information about a load (14) that draws a load current to a recipient, comprising:

a sensor effective to generate a first signal (126) containing information about said load;

a reference second signal (128);

a first device capable of calculating a ratio of said first signal (126) to said second signal (128) and converting said ratio into a binary number;

a second device that converts 0 members of said binary number to a first data current (32) and 1 members of said binary number into a second data current (34) that is different from said first data current;

a common electrical line for transmitting a total current that is said load current plus said first data current or said load current plus said second data current; and

said recipient coupled to said common electrical line and capable of converting current modulations to said binary number and said binary number to said information.

2. The system of claim 1 wherein said sensor is electrically coupled to said load (14).

3. The system of claim 1 or 2 wherein said sensor is external to said load (14).

4. The system of any of the preceding claims wherein said load (14) is an actuator attached to an aircraft component.

5. The system of claim 4 wherein said actuator is attached to a rudder and said sensor is effective to determine an angle between said rudder and a vertical stabilizer.

6. The system of any of the preceding claims wherein said first device is an analog to digital converter (132).

7. The system of any of the preceding claims wherein said second device includes first and second transistor current sources (38, 40).

8. The system of any of the preceding claims wherein said recipient is remote from said common electrical line and receives data via wireless communication.

9. A method to transmit information about a load (14) drawing a load current to a recipient, comprising the steps of:

generating a first signal containing information about said load; calculating a ratio of said first signal to a reference signal; transforming said ratio into a binary number;

transforming said binary number into pulses of a first data current (32) and a different second data current (34) wherein said first data current corresponds to binary 0 values and said second data current corresponds to binary 1 values;

summing said load current and said first data current or said load current and said second data current to form a total current; and

said recipient converting modulation of said total current into said binary number and said binary number into said information.

10. The method of claim 9 wherein said information is a ratio of a sensor output to a control output.

11. The method of claim 10 wherein an analog to digital converter (132) transforms said ratio to a binary value.

12. The method of claim 11 including the step of transmitting said binary value to first and second transistor current sources (38, 40).

13. The method of claim 12 wherein one of said transistor current sources (40) is activated to generate a binary 0 value.

14. The method of claim 12 wherein both of said transistor current sources are (38, 40) activated to generate a binary 1 value.

15. The method of any of claims 9 to 14 including selecting said load (14) to be an aircraft component.

**Patentansprüche**

1. System (10), das wirksam ist, um Information über eine Last (14), die einen Laststrom zieht, an einen Empfänger zu übermitteln, aufweisend:

einen Sensor, der zum Erzeugen eines ersten Signals (126) wirksam ist, das Information über die Last beinhaltet;
ein zweites, Referenzsignal (128);
eine erste Vorrichtung, die in der Lage ist, ein Verhältnis des ersten Signals (126) zu dem zweiten Signal (128) zu berechnen und das Verhältnis in eine binäre Zahl umzuwandeln;
eine zweite Vorrichtung, die 0-Elemente der binären Zahl in einen ersten Datenstrom (32) umwandelt und 1-Elemente der binären Zahl in einen zweiten Datenstrom (34) umwandelt, der sich von dem ersten Datenstrom unterscheidet;
eine gemeinsame elektrische Leitung für die Übertragung eines Gesamtstroms, der der Laststrom plus der erste Datenstrom oder der Laststrom plus der zweite Datenstrom ist; und
den Empfänger, der mit der gemeinsamen elektrischen Leitung gekoppelt ist und in der Lage ist, Strommodulationen in die binäre Zahl sowie die binäre Zahl in die Information umzuwandeln.

2. System nach Anspruch 1,
wobei der Sensor mit der Last (14) elektrisch gekoppelt ist.

3. System nach Anspruch 1 oder 2,
wobei der Sensor extern von der Last (14) vorgesehen ist.

4. System nach einem der vorhergehenden Ansprüche,
wobei die Last (14) ein an einer Flugzeugkomponente angebrachtes Stellglied ist.

5. System nach Anspruch 4,
wobei das Stellglied an einem Ruder angebracht ist und der Sensor wirksam ist, um einen Winkel zwischen dem Ruder und einem vertikalen Stabilisator zu bestimmen.

6. System nach einem der vorhergehenden Ansprüche,
wobei die erste Vorrichtung ein Analog-Digital-Wandler (132) ist.

7. System nach einem der vorhergehenden Ansprüche,
wobei die zweite Vorrichtung eine erste und eine zweite Transistor-Stromquelle (38, 40) aufweist.

8. System nach einem der vorhergehenden Ansprüche,
wobei der Empfänger entfernt von der gemeinsamen elektrischen Leitung vorgesehen ist und Daten über drahtlose Kommunikation empfängt.

9. Verfahren, um Information über eine Last (14), die einen Laststrom zieht, an einen Empfänger zu übermitteln, wobei das Verfahren folgende Schritte aufweist:

Erzeugen eines ersten Signals, das Information über die Last enthält;
Berechnen eines Verhältnisses des ersten Signals zu einem Referenzsignal;
Umwandeln des Verhältnisses in eine binäre Zahl;
Umwandeln der binären Zahl in Impulse eines ersten Datenstroms (32) und eines davon verschiedenen, zweiten Datenstroms (34), wobei der erste Datenstrom binären Werten 0 entspricht und der zweite Datenstrom binären Werten 1 entspricht;
Summieren des Laststroms und des ersten Datenstroms oder des Laststroms und des zweiten Datenstroms, um einen Gesamtstrom zu erzeugen; und
wobei der Empfänger eine Modulation des Gesamtstroms in die binäre Zahl und die binäre Zahl in die Information umwandelt.

10. Verfahren nach Anspruch 9,
wobei die Information ein Verhältnis eines Sensorausgangs zu einem Steuerausgang ist.

11. Verfahren nach Anspruch 10,
wobei ein Analog-Digital-Wandler (132) das Verhältnis in einen binären Wert umwandelt.

12. Verfahren nach Anspruch 11,
das den Schritt beinhaltet, in dem der binäre Wert zu einer ersten und einer zweiten Transistor-Stromquelle (38, 40) übertragen wird.

**13.** Verfahren nach Anspruch 12,
wobei eine der Transistor-Stromquellen (40) aktiviert wird, um einen binären Wert 0 zu erzeugen.

**14.** Verfahren nach Anspruch 12,
wobei beide der Transistor-Stromquellen (38, 40) aktiviert werden, um einen binären Wert 1 zu erzeugen.

**15.** Verfahren nach einem der Ansprüche 9 bis 14,
bei dem als Last (14) eine Flugzeugkomponente ausgewählt wird.

**Revendications**

**1.** Système (10) efficace pour transmettre des informations concernant une charge (14) qui tire un courant de charge à un destinataire, comprenant :

un capteur efficace pour générer un premier signal (126) contenant des informations concernant ladite charge ;
un deuxième signal de référence (128) ;
un premier dispositif capable de calculer un rapport entre ledit premier signal (126) et ledit deuxième signal (128) et convertir ledit rapport en un nombre binaire ;
un deuxième dispositif qui convertit des éléments 0 dudit nombre binaire en un premier courant de données (32) et des éléments 1 dudit nombre binaire en un deuxième courant de données (34) qui est différent dudit premier courant de données ;
une ligne électrique commune pour transmettre un courant total qui est ledit courant de charge plus ledit premier courant de données ou ledit courant de charge plus ledit deuxième courant de données ; et
ledit destinataire étant couplé à ladite ligne électrique commune et capable de convertir des modulations de courant en ledit nombre binaire et ledit nombre binaire en lesdites informations.

**2.** Système selon la revendication 1, dans lequel ledit capteur est couplé électriquement à ladite charge (14).

**3.** Système selon la revendication 1 ou 2, dans lequel ledit capteur est externe à ladite charge (14).

**4.** Système selon l'une quelconque des revendications précédentes, dans lequel ladite charge (14) est un actionneur relié à un composant d'aéronef.

**5.** Système selon la revendication 4, dans lequel ledit actionneur est relié à une gouverne de direction et ledit capteur est efficace pour déterminer un angle entre ladite gouverne de direction et un stabilisateur vertical.

**6.** Système selon l'une quelconque des revendications précédentes, dans lequel ledit premier dispositif est un convertisseur analogique-numérique (132).

**7.** Système selon l'une quelconque des revendications précédentes, dans lequel ledit deuxième dispositif comprend des première et deuxième sources de courant à transistors (38, 40).

**8.** Système selon l'une quelconque des revendications précédentes, dans lequel ledit destinataire est éloigné de ladite ligne électrique commune et reçoit des données via une communication sans fil.

**9.** Procédé pour transmettre des informations concernant une charge (14) tirant un courant de charge à un destinataire, comprenant les étapes suivantes :

la génération d'un premier signal contenant des informations concernant ladite charge ;
le calcul d'un rapport entre ledit premier signal et un signal de référence ;
la transformation dudit rapport en un nombre binaire ;
la transformation dudit nombre binaire en impulsions d'un premier courant de données (32) et d'un deuxième courant de données différent (34), dans lequel ledit premier courant de données correspond à des valeurs de 0 binaire et ledit deuxième courant de données correspond à des valeurs de 1 binaire ;
l'addition dudit courant de charge et dudit premier courant de données ou dudit courant de charge et dudit deuxième courant de données pour former un courant total ; et
la conversion, par ledit destinataire, d'une modulation dudit courant total en ledit nombre binaire et dudit nombre binaire en lesdites informations.

10. Procédé selon la revendication 9, dans lequel ladite information est un rapport entre une sortie du capteur et une sortie de commande.

11. Procédé selon la revendication 10, dans lequel un convertisseur analogique-numérique (132) transforme ledit rapport en une valeur binaire.

12. Procédé selon la revendication 11, incluant l'étape de transmission de ladite valeur binaire à des première et deuxième sources de courant à transistors (38, 40).

13. Procédé selon la revendication 12, dans lequel une desdites sources de courant à transistors (40) est activée pour générer une valeur de 0 binaire.

14. Procédé selon la revendication 12, dans lequel lesdites deux sources de courant à transistors (38, 40) sont activées pour générer une valeur de 1 binaire.

15. Procédé selon l'une quelconque des revendications 9 à 14, incluant la sélection de ladite charge (14) pour être un composant d'aéronef.

FIG. 1

FIG. 2

FIG. 3

**EP 2 536 035 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 7304567 B, Canfield